# EUROPEAN PATENT SPECIFICATION

(11) **EP 0 647 866 B1**
(45) Date of publication and mention of the grant of the patent: **26.04.2000**
(21) Application number: 94115901.4
(22) Date of filing: 08.10.1994
(51) Int. Cl.: G02B 6/44

(54) **Method of manufacturing a modular optical fibre core tape separable into a plurality of tape modules**
Verfahren zur Herstellung eines in mehrere Einheiten aufteilbaren optischen Fiberbandmoduls
Procédé de fabrication d'un ruban modulaire de fibres optiques séparable en plusieurs modules

(30) Priority: 12.10.1993 IT MI932152
(43) Date of publication of application: 12.04.1995
(73) Proprietor: ALCATEL, 75008 Paris (FR)
(72) Inventor: Comezzi, Gerardo, I-00126 Roma (IT)
(74) Representative: Knecht, Ulrich Karl, Dipl.-Ing.

(56) References cited:
- EP-A- 0 321 787
- DE-U- 8 901 208
- US-A- 4 720 165
- PATENT ABSTRACTS OF JAPAN vol. 13, no. 389 (P-925) 29 August 1989 & JP-A-01 137 209 (SUMITOMO) 30 May 1989
- PATENT ABSTRACTS OF JAPAN vol. 12, no. 499 (P-807) 27 December 1988 & JP-A-63 208 814 (HITACHI) 30 August 1988

## Description

The present invention relates to a method of manufacturing a separable optical fibre core tape as set forth in the preamble of claim 1.

Small-sized optical cables are nowadays available on the market, comprising inside them tapes formed by four optical fibres aligned and embedded into a common coating generally made of acrylate resins, of the same nature as the primary coating of the optical fibres.

Large-sized cables (typically 200-1000 optical fibres) are also available, using ribbons or modules of 8, 12, 16, ... optical fibres. In particular 8-fibre modules are used, in turn separable into two 4-fibre modules.

The need and utility of the separability is due to the compatibility of the 8-fibre tapes with the widely-circulated 4-fibre tapes with which they can therefore be promiscuously handled, fibre-to-fibre jointed through multiple or single melting or through multiple or single connectors.

In order to be able to easily split the tapes into 4-fibre modules on the field without damaging the optical fibres and without using special tools, several solutions have been adopted. One of these is based upon a double embedding, i e two 4-fibre modules are preliminarily assembled and cross-linked and subsequently a common coating is applied around the two flanked modules.

Clearly this solution, besides being expensive because of the double process, entails on increase in size and weight both of the tape and the cable employing it.

Other solutions are based upon the narrowing of the thickness of the covering resin at the portion of the split line between the two modules.

In one of them, such narrowing is obtained by covering the two optical fibres adjacent to the split line along a longitudinal cross-section of the tape with flexible resin having low Young's module and then embedding the whole into rigid resin having high Young's modules. In such way, at the split line, the thickness of the rigid resin coating becomes smaller. However, also this type of tape has the same drawbacks as the above-mentioned double process solution.

Another solution is based upon the application of a very thin layer of resin (typically 20 micron thick against 50-80 microns generally used) with the expedient of adding a release agent at the line between contiguous optical fibres where the tape is to be split in order to make the resin softer at the separation line during split.

Also this solution has drawbacks since, besides weakening the structure of the tape, the introduction of release agents may give rise to problems, especially in the presence of humidity. In fact, being the acrylate of the coating an hydrophilic material, the eventual absorption of water into the coating can entail the localization of the same in the discontinuity zone created by the releasing agent with bubble formation which could cause transmission losses due to microbendings of the optical fibres. Moreover, tapes used nowadays still require to use a specific tool for cutting and/or eliminating flashes.

DE-U-8901208 disloses a modular optical fibre core tape separable into a plurality of tape units or modules. The split into modules is implemented along one longitudinal section between contiguous fibres of consecutive modules.

The tape comprises one separation element embedded in the resin matrix along said longitudinal section and designed to easy the splitting of the tape along said longitudinal section. The separation element is interposed between two contiguous fibres in the plane containg the centres of the fibres.

JP-A-1 137209 discloses a method for manufacturing a separable 8-fibre tape-shaped core. Therein two 4-fibre modules are pre-figured, a resin is applied separately on each of the modules and then a limited surface area of the covering layers thus obtained is pre-cured; then a wire rod from a wire supplying means is laid on this precured surface area between the two modules which are then brought together and the resin is ultimately cured so as to form an overall covering layer which integrates the eight optical fibres. As a result, a constricted part of the covering layer is created, the wire rod being embeded into the covering layer in this constricted part whose physical strenght is low so as to facilitate the branching of the two modules by pulling the wire rod when in use. US 4,720,165 discloses a method for the fabrication of an optical fibre sheet by applying an adhesive to the contacted portion of the fibres held contacted with one another and solidifying the adhesive to fix the fibres in the sheet-like form. The adhesive may be composed of an ultraviolet ray-curable resin. However, no teaching is provided on how to embed a separation element in the sheet.

It is an object of the present invention to overcome the prior art drawbacks. This and other object, which will become more apparent hereinafter, are achieved through a method of manufacturing a separable optical fibre core tape having the characteristics set forth in claim 1. Further characteristics and advantages of the invention will result better from the following description of an embodiment thereof given by way of a not limiting example in conjunction with the attached drawing wherein
- Fig- 1 represents schematically a cross-section of an 8-fibre tape separable in accordance with the present invention, and

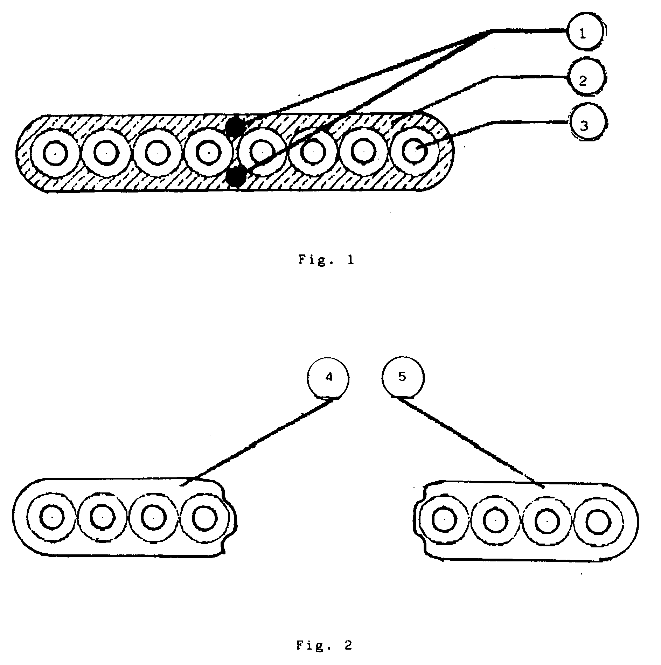

- Fig. 2 represents two modules, each incorporating four optical fibres, obtained by splitting the tape of Fig. 1.

With reference to the figures, and in particular to Fig. 1, the tape is composed of a series (eight in the embodiment illustrated herein, separable into two 4-fibre modules) of optical fibres 3 disposed in a parallel arrangement on a plane, embedded into a protective coating matrix 2 generally made of acrylates of the same nature as the primary coating of the optical fibres.

As the split line of the modules (between the 4th and the 5th fibre in the illustrated embodiment), at least one (two in Fig. 1) separation element 1 made of a material chemically compatible with the acrylates of the matrix and having high tensile strength is embedded in the matrix 2.

In the illustrated embodiment, the two separation elements 1 are thread-like with a circular cross-section and are arranged symmetrically with respect to the plane formed by the axes of the optical fibres 3.

The separation element can be formed by wires made of polyamide resin or other synthetic materials, and therefore polyester or aramid fibre yarns, fibre glass cords, carbon fibres or metallic wires could be used as well. At any rate the used wires should have a tensile strength preferably not less than 35 N/sq.mm.

Advantageously, the separation element can be suitably coloured in such a way as to give the matrix an orientation of the type, e.g., up-down to which reference is made in numbering the optical fibres which, therefore, can be embedded in the matrix without preventive coloration, or the element can be colorless if the optical fibres are already coloured, with the same result.

The optical fibre core tape is manufactured by suitably applying in line the eight fibres paralleled up and one or more (typically two) separation elements.

The manufacturing process of the typic acrylate cross-linking through UV irradiation comprises the in-line control of the tensile stress of both the eight optical fibres and of the separation element(s) at the same time, preferably but not necessarily through electronic or electromechanical adjustment of the decoilers.

Therefore, it is necessary to use at least one decoiler for the separation elements, or to use wheels or continuous belts in line for detection and braking of the separation elements with control of the braking and therefore of the tensile stress, the braking force having such values as to allow tensile stresses on the separation elements preferably comprised between 5 cN and 50 cN.

The resin of the matrix is applied by pressure through suitably calibrated dies, which also perform functions of aligning the tape structure and forming the profile of the same with the wished dimensions.

For instance, in a tape comprised of eight fibres already provided with suitable acrylate primary coating, each having outer diameter 245 + 10 microns and already coloured some microns thick using UV cross-linkable or thermally-dried inks, one or more wires 50 to 250 micron diameter can be used as separation element(s), depending on the needs of use.

The resin matrix is applied around the whole array composed of the eight optical fibres and separation elements according to the process described above; its function is to embed optical fibres and separation elements in a one piece (whose cross-section is shown in Fig. 1), said matrix being also a secondary coating for the embedded optical fibres, and a cabling base module in optical fibre cables generally, but not necessarily, large-sized cables.

Such tape has outer dimensions generally confined within:
* thickness : 380 microns plus 50 microns
* width : 2150 microns plus 200 microns
The split of the tape into 4-optical fibre modules is obtained manually in a simple manner by exerting a direct tensile force on the separation element(s) towards the outside of the tape while keeping the element, preferably but not necessarily, stretched perpendicularly to the fibre's axis and to the tape's surface.

Thus the invention fully achieves the above-mentioned object.

Through the structure and the method described above in accordance with the present invention there is provided a modular optical fibre core tape, in particular an 8-optical fibre tape, having limited dimensions, a compact structure unweakened at any point, quite the contrary strengthened, which fully surrounds the fibres and therefore in every circumstances it acts as an adherent secondary coating for the fibres.

Moreover, the tape according to the invention does not require the use of any special tool neither for splitting the modules (4,5) nor for the eventual cutting and/or elimination of flashes, since the split operation of the embedded separation element is clear-cut (Fig. 2) and accurate, i.e. it is as if the cutting tool were pre-introduced into the tape matrix.

A further intrinsic advantage of the tape in accordance with the invention, lies in the possibility of a different identification code for the optical fibres.

In fact nowadays it is customary to colour the fibres with differently coloured inks. The presence of the coloured separation element inside the tape matrix in accordance with the present invention makes this unnecessary with obvious cost savings and improved reliability of the product.

While the invention has been described with reference to a specific embodiment of an 8-optical fibre tape in order to show the implementation of the inventive concept, it should be noted that the invention is not to be construed as limited to the illustrated embodiment being susceptible to those modifications and variations which being apparent to those skilled in the art should be understood as falling within the invention as defined in the claims.

For instance, in order to further improve the split operation, one or more variations in the profile of the cross section, e.g. notches, can be provided at such extent, as to number and dimensions, that the structure of the tape is not weakened, as well as should the separation element not be pulled correctly, means could be provided for the purpose.

Naturally, the materials and the dimensions can be varied according to the needs of production and use still observing the characteristics illustrated, described and hereinafter claimed.

## Claims

1. Method of manufacturing an optical fibre core tape (4-5) including a modular series of optical fibres (3) disposed in a parallel arrangement on a plane, the optical fibre core tape being separable into tape modules (4, 5) along at least one longitudinal section between contiguous fibres of consecutive modules, the optical fibres being each provided with a primary coating and embedded in a synthetic resin matrix (2), in which method the tape matrix resin, particularly one of the same nature as said primary coating, is applied by pressure through suitably calibrated dies for also aligning the tape structure and forming a profile thereof with selected dimensions, the method including the step of embedding in said resin matrix at least one high-tensile strength, thread-like separation element (1) made of a material chemically compatible with the matrix resin along at least one longitudinal section between contiguous fibres of consecutive modules (4, 5), the method being characterized in that:
- said at least one separation element (1) and said aligned optical fibres (3) are embedded in line in said resin matrix (2) and both subjected in line to a selected tensile stress, and
- the resin matrix includes an acrylate cross-linked through ultraviolet irradiation.

2. Method of manufacturing a separable optical fibre core tape according to claim 1, characterized in that the tensile stresses of both optical fibres (3) and separation element (1) are controlled simultaneously and in line.

3. Method of manufacturing a separable optical fibre core tape according to claim 2, characterized in that said in line and simultaneous control of said tensile stresses is carried out through electronic or electromechanical adjustment of decoilers.

4. Method of manufacturing a separable optical fibre core tape according to any of the preceeding claims, characterized in that said selected tensile stress imparted to said separation element is comprised between 5 cN and 50 cN.

5. Method of manufacturing a separable optical fibre core tape according to any of the preceeding claims, characterized in that two thread-like separation elements are embedded in respective positions which are symmetrical with respect to the plane containing the axes of the aligned optical fibres.

## Patentansprüche

1. Verfahren zur Herstellung eines optischen Faserkernbandes (4 - 5), das eine modulare Reihe von optischen Fasern (3) enthält, die in paralleler Anordnung in einer Ebene angeordnet sind, wobei das optische Faserkernband in Bandmodule (4, 5) längs wenigstens eines längsgerichteten Schnittes zwischen angrenzenden Fasern aufeinanderfolgender Module trennbar ist, und die optischen Fasern jeweils mit einer Primärbeschichtung ausgestattet und in eine synthetische Harzmatrix (2) eingebettet sind, in welchem Verfahren das Bandmatrixharz, das insbesonder eines von der gleichen Art wie die genannte Primärbeschichtung ist, mittels Druck durch geeignet kalibrierte Formen, die auch zur Ausrichtung der Bandstruktur und zur Ausbildung dessen Profils bei gewählten Abmessungen dienen, aufgebracht wird, und das Verfahren den Schritt enthält, bei dem in die genannte Harzmatrix wenigstens ein fadenartiges Trennelement (1) mit hoher Zugfestigkeit, das aus einem Material gefertigt ist, das zum Matrixharz chemisch kompatibel ist, entlang wenigstens eines Längsschnittes zwischen angrenzenden Fasern aufeinanderfolgender Module eingebettet wird (4, 5), wobei das Verfahren
**dadurch gekennzeichnet ist, daß:**
- wenigstens ein Trennelement (1) und die genannten ausgerichteten optischen Fasern (3) in der genannten Harzmatrix (2) in Reihe eingebettet sind, und beide in der Reihe einer gewählten Zugspannung unterworfen sind, und
- die Harzmatrix ein durch ultraviolette Strahlung vernetztes Acrylat enthält.

2. Verfahren zur Herstellung eines trennbaren optischen Faserkernbandes nach Anspruch 1,
**dadurch gekennzeichnet, daß** die Zugspannung von sowohl den optischen Fasern (3) als auch dem Trennelement (1) gleichzeitig und in der Reihe kontrolliert wird.

3. Verfahren zur Herstellung eines trennbaren optischen Faserkernbandes nach Anspruch 2,
**dadurch gekennzeichnet, daß** die genannte gleichzeitige und in der Reihe erfolgende Kontrolle der genannten Zugspannung durch elektronische oder elektromechanische Regelung von Abwickelvorrichtungen durchgeführt wird.

4. Verfahren zur Herstellung eines trennbaren optischen Faserkernbandes nach einem der vorhergehenden Ansprüche,
**dadurch gekennzeichnet, daß** die genannte gewählte, dem genannten Trennelement auferlegte, Zugspannung zwischen 5 cN und 50 cN liegt.

5. Verfahren zur Herstellung eines trennbaren optischen Faserkernbandes nach einem der vorhergehenden Ansprüche,
**dadurch gekennzeichnet, daß** zwei fadenartige Trennelemente bezüglich der Ebene, die die Achsen der ausgerichten optischen Fasern enthält, in jeweils symmetrischer Lage eingebettet sind.

## Revendications

1. Procédé de fabrication d'un ruban de fibres optiques (4-5), comportant une série modulaire de fibres optiques (3) disposées selon un agencement parallèle sur un plan, le ruban de fibres optiques étant séparable en modules de ruban (4, 5) au moins le long d'une section longitudinale entre fibres contiguës de modules consécutifs, les fibres optiques étant pourvues chacune d'un revêtement principal et incorporées dans une matrice de résine synthétique (2), dans lequel procédé, la résine de la matrice de ruban, en particulier une résine de la même nature que ledit revêtement principal, est appliquée par pression par l'intermédiaire de matrices convenablement calibrées pour aligner également la structure de ruban et former un profil de celle-ci avec des dimensions sélectionnées, le procédé comportant l'étape consistant à incorporer dans ladite matrice de résine au moins un élément de séparation fileté de forte résistance à la traction (1) fait d'une matière chimique compatible avec la résine de la matrice au moins le long d'une section longitudinale entre fibres contiguës de modules consécutifs (4, 5) le procédé étant caractérisé en ce que :
- ledit au moins un élément de séparation (1) et lesdites fibres optiques alignées (3) sont incorporés en ligne dans ladite matrice de résine (2) et
- la matrice de résine comporte un acrylate réticulé par irradiation par ultraviolet.

2. Procédé de fabrication d'un ruban de fibres optiques séparable selon la revendication 1, caractérisé en ce que les contraintes de traction à la fois sur les fibres optiques (3) et l'élément de séparation (1) sont commandées simultanément et en ligne.

3. Procédé de fabrication d'un ruban de fibres optiques séparable selon la revendication 2, caractérisé en ce que ladite commande en ligne et simultanée desdites contraintes de traction est effectuée par réglage électronique ou électromécanique de dérouleuses.

4. Procédé de fabrication d'un ruban de fibres optiques séparable selon l'une quelconque des revendications précédentes, caractérisé en ce que ladite contrainte de traction sélectionnée communiquée audit élément de séparation est comprise entre 5 cN et 50 cN.

5. Procédé de fabrication d'un ruban de fibres optiques séparable selon l'une quelconque des revendications précédentes, caractérisé en ce que deux éléments de séparation sous forme de fil sont incorporés dans des positions respectives qui sont symétriques par rapport au plan contenant les axes des fibres optiques alignées.
